# EUROPEAN PATENT SPECIFICATION

(11) **EP 2 341 684 B1**
(45) Date of publication and mention of the grant of the patent: **04.01.2017**
(21) Application number: 10189864.1
(22) Date of filing: 03.11.2010
(51) Int. Cl.: H04L 29/06, H04L 29/12

(54) **Display Apparatus and Streaming Transporting Method of the Same**
Anzeigevorrichtung und Stromtransportverfahren
Appareil d'affichage et procédé de transport en continu

(30) Priority: 04.01.2010 KR 20100000253
(43) Date of publication of application: 06.07.2011
(73) Proprietor: Samsung Electronics Co., Ltd., Suwon-si, Gyeonggi-do, 443-742 (KR)
(72) Inventor: Kim, Hyo-dae, Gyeonggi-do (KR)
(74) Representative: Hewett, Jonathan Michael Richard

(56) References cited:
- EP-A1- 1 612 685
- US-A1- 2007 233 784

## Description

The present invention relates to a display apparatus and a streaming transporting method of the same, and more particularly, to a display apparatus and a streaming transporting method of the same which streams a content.

Such matter is disclosed in prior art patent documents EP 1 612 685 A1 and US 2007/233784 A1.

Streaming refers to a transportation of content, e.g., at least one of a video and an audio, from a server to a client in a network such as the Internet. The server divides the content into packets to transport the video through the network. The client recombines the divided content and reproduces the content. The receiving and reproduction of the packets occur at the same time. The series of related packets are called streams.

The streaming is different from a simple transportation of a file to be reproduced after a completion of transportation of the entire content in that the client reproduces the content while receiving the content. The client reproduces the content while receiving packets and dismisses the reproduced data. Protocols such as Hyper Text Transport Protocol (HTTP), File Transfer Protocol (FTP), Real-time Transport Protocol (RTP), and Real-time Streaming Protocol (RTSP) are used to stream files. The HTTP and the FTP are file transmission protocols in nature while the RTP and the RTSP are real-time file streaming protocols.

The RTP is used in the related art to transport files in real-time, though recently, the HTTP has been designated as a basic streaming protocol in Universal Plug and Play (UPnP) AV/Digital Living Network Alliance (DLNA) due to its simplicity and convenience.

Accordingly, one or more exemplary embodiments of the present invention provide a display apparatus according to appended claim 1 and a streaming transporting method according to appended claim 9 thereof which streams a media content efficiently.

Another exemplary embodiment provides a display apparatus and a streaming transporting method thereof which prevents a user's misunderstanding even if a media content is changed.

Still another exemplary embodiment provides a display apparatus and a streaming transporting method thereof which provides a user interface (UI) to accept an existing user's selection if a media content is changed.

According to an aspect of the present invention, there is provided a display apparatus, including: a content processor which processes a first media content, of a plurality of media contents; a communication unit which communicates with a plurality of terminals; and a controller which assigns a first address to the first media content in response to a request for the first media content, and streams the first media content processed by the content processor to a first terminal, of the plurality of terminals, based on the first address.

The controller may assign a second address, which is different from the first address, to a second media content, which is different from the first media content, in response to a request for a streaming of the second media content by another a second terminal, of the plurality of terminals.

The controller may stream the second media content processed by the content processor to the second terminal based on the second address and may suspend the streaming of the first media content to the first terminal.

The controller may transmit notification information on a change of requested media content to the first terminal receiving the first media content if the streaming of the second media content is requested for.

The display apparatus may further include a broadcasting receiver which receives the media content.

The content processor may reduce a resolution of a received media content.

The display apparatus may further include an additional content processor, wherein the controller may control the additional content processor to stream the second media content to the second terminal requesting the second media content based on the second address.

The display apparatus may further include at least two content receivers which receive the media content.

According to another aspect of the present invention, there is provided a display apparatus, including: a content processor which processes first and second media contents; a communication unit which communicates with a plurality of terminals; and a controller which streams the first media content to a first terminal, of the plurality of terminals, streams the second media content, which is different from the first media content, to a second terminal, of the plurality of terminals requesting the second media content in response to a request for the streaming of the second media content by the second terminal, and controls the content processor to suspend the streaming of first the media content to the first terminal in response to the streaming of the second media content.

The controller may assign a first address to the first media content and may stream the first media content based on the first address, and may assign a second address, different from the first address, to the second media content and suspends the streaming of the first media content to the first terminal in response to the request for the streaming of the second media content.

According to another aspect of the present invention, there is provided a streaming transporting method of a display apparatus which communicates with a plurality of terminals, the method including: assigning a first address to a first media content among a plurality of media contents in response to a request for the first media content; processing the first media content to be streamed; and streaming the first media content to a first terminal of the plurality of terminals based on the first address.

The method may further include assigning a second address, which is different from the first address, to a second media content, which is different from the first media content, in response to a request for a streaming of the second media content from the second terminal, of the plurality of terminals; and streaming the second media content to the second terminal requesting the second media content based on the second address.

The assigning the second address may include suspending the streaming of the first media content to the first terminal receiving the first media content.

The method may further include transmitting notification information on a change of requested media content to the first terminal receiving the first media content.

The processing the first media content may include reducing a resolution of a received media content.

According to another aspect of the present invention, there is provided a streaming transporting method of a display apparatus which communicates with a plurality of terminals, the method comprising: assigning a first address to a first media content, among a plurality of media contents provided by the display apparatus, in response to a request for the first media content; streaming the first media content to the first terminal based on the first address; and suspending the streaming the first media content to the first terminal in response to an assigning of a second address, different from the first address, to a second media content requested by a second terminal.

The above and/or other aspects will become apparent and more readily appreciated from the following description of exemplary embodiments, taken in conjunction with the accompanying drawings, in which:
FIG. 1 illustrates a display apparatus and a plurality of terminals according to an exemplary embodiment;
FIG. 2 is a control block diagram of the display apparatus in FIG. 1;
FIG. 3 is a control flowchart of a streaming transporting method of a display apparatus according to an exemplary embodiment;
FIG. 4 is a control flowchart of a streaming transporting method of a display apparatus according to another exemplary embodiment;
FIG. 5 is a control flowchart of a streaming transporting method of a display apparatus according to another exemplary embodiment;
FIG. 6 is a control flowchart of a streaming transporting method of a display apparatus according to another exemplary embodiment; and
FIG. 7 is a control block diagram of a display apparatus according to another exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. Expressions such as "at least one of," when preceding a list of elements, modify the entire list of elements and do not modify the individual elements of the list.

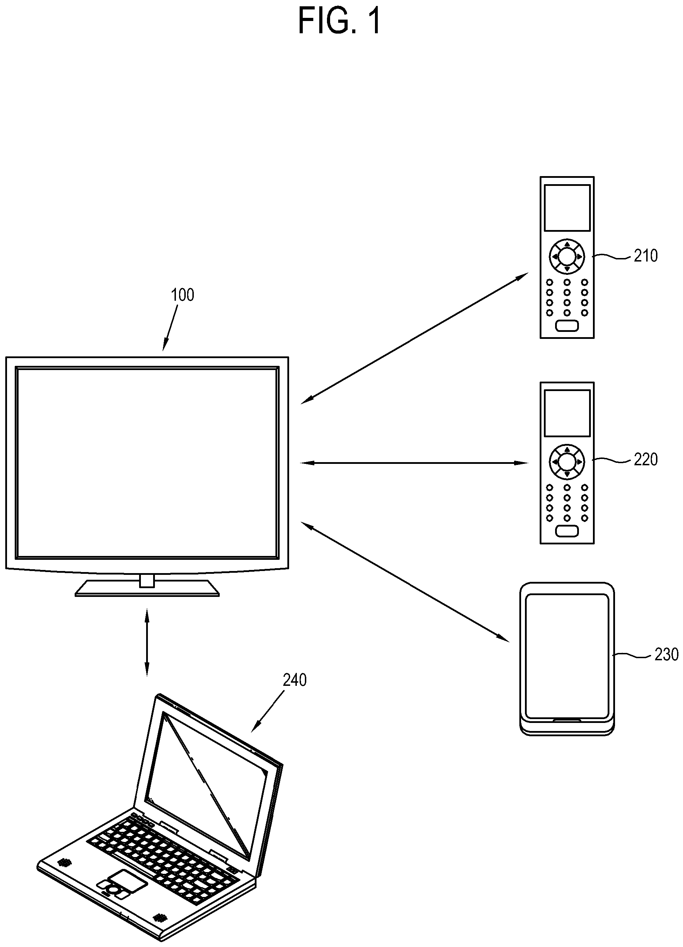

FIG. 1 illustrates a display apparatus 100 and a plurality of terminals 210, 220, 230 and 240 according to an exemplary embodiment. As shown therein, the display apparatus 100 communicates with the plurality of terminals 210, 220, 230 and 240 and stream-transports a media content. The media content includes a reproducible multimedia file, such as a music file, a picture file, and a video file. The media content may further include a content which is output by various video sources, such as a broadcasting signal, a movie, a game, etc. The display apparatus 100 includes, as examples, a television (TV), an internet protocol TV (IPTV), a computer system, a personal terminal, a large format display (LFD), a table top display (TPD), etc. The display apparatus 100 acts as a server which provides an external-sourced or stored media content to the communicating terminals 210, 220, 230 and 240. The terminals 210, 220, 230 and 240 may include a portable terminal including a display unit to display thereon a media content such as a picture or a video. As shown therein, the first terminal 210 and the second terminal 220 include a remote control which controls the display apparatus 100 from an outside. The third terminal 230 includes a portable telephone and the fourth terminal 240 includes a notebook computer or a laptop computer. The terminals 210, 220, 230 and 240 include a user input unit to request a media content or to control a received media content. The user input unit may include at least one of a key button, a wheel button, a touch panel detecting a user's touch, a mouse, a keyboard, etc.

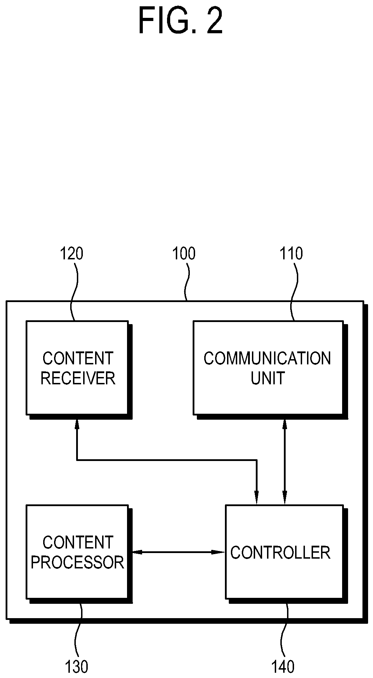

FIG. 2 is a control block diagram of the display apparatus 100 in FIG. 1. Referring to FIG. 2, the display apparatus 100 includes a communication unit 110, a content receiver 120, a content processor 130 and a controller 140 which controls the foregoing elements 110, 120, and 130.

The communication unit 110 discovers at least one of the terminals 210, 220, 230 and 240 according to a control of the controller 140, and performs a communication to stream a media content according to a request from the terminals 210, 220, 230 and 240. The communication unit 110 may include one or more communication modules corresponding to at least one of Bluetooth, Wi-Fi, Zigbee, infrared (IR) communication, radio frequency (RF) communication and other various communication methods. Middleware which supports a home networking to share a digital content such as music, photos and video stored in an electronic device including a computer, electric home appliances and a portable terminal includes Universal Plug and Play (UPnP), Home Audio Video Interoperability (HaVi), Jini, Video Electronics Standards Association (VESA), Digital Living Network Alliance (DLNA), etc. The display apparatus 100 according to the present exemplary embodiment streams a media content to the terminals 210, 220, 230 and 240 through a protocol such as Hyper Text Transport Protocol (HTTP), File Transfer Protocol (FTP), Real-time Transport Protocol (RTP) and Real-time Streaming Protocol (RTSP).

The content receiver 120 may include at least one of various interfaces, a connector or a receiver to receive a media content from a storage unit storing therein the media content. For example, the content receiver 120 may receive an RF signal in a wireless manner from a broadcasting station (not shown) or an image signal according to composite video, component video, super video, SCART, and High Definition Multimedia Interface (HDMI). Furthermore, the content receiver 120 may receive an RGB signal through D-subminiature according to Video Graphics Array (VGA) or an image signal through Digital Video Interface (DVI) and HDMI.

The content processor 130 processes an image signal received by the content receiver 120 using various preset methods. The processing of the signal by the content processor 130 may include at least one of decoding, encoding, deinterlacing, converting of a frame rate, scaling, reducing noise for improvement of image quality and detail enhancing, though it is understood that another exemplary embodiment is not limited thereto.

The content processor 130 may reduce a resolution of a media content when stream-transporting the media content to the terminals 210, 220, 230 and 240. For example, the content processor 130 may reduce a high definition (HD) resolution to a standard definition (SD) resolution of an image signal. The display apparatus 100 according to the present exemplary embodiment stream-transports a media content to be reproduced in real-time by the terminals 210, 220, 230 and 240 and, thus, a volume of the data transmission may be an issue in reproducing the media content. To ensure prompt transmission of data and reliability of image reproduction, the content processor 130 may reduce the resolution of the image and stream the image to the terminals 210, 220, 230 and 240.

The content processor 130 may include individual configurations to independently perform each process or a single configuration combining operations. The display apparatus 100 may include a single content processor 130, though it is understood that another exemplary embodiment is not limited thereto.

The controller 140 assigns a first address to a first media content among a plurality of media contents, stream-transports the first media content processed by the content processor 130 to at least one of the plurality of terminals 210, 220, 230 and 240 based on the first address, and assigns a second address, different from the first address, to a second media content, different from the first media content, upon a request for the second media content from another one of the plurality of terminals 210, 220, 230 and 240.

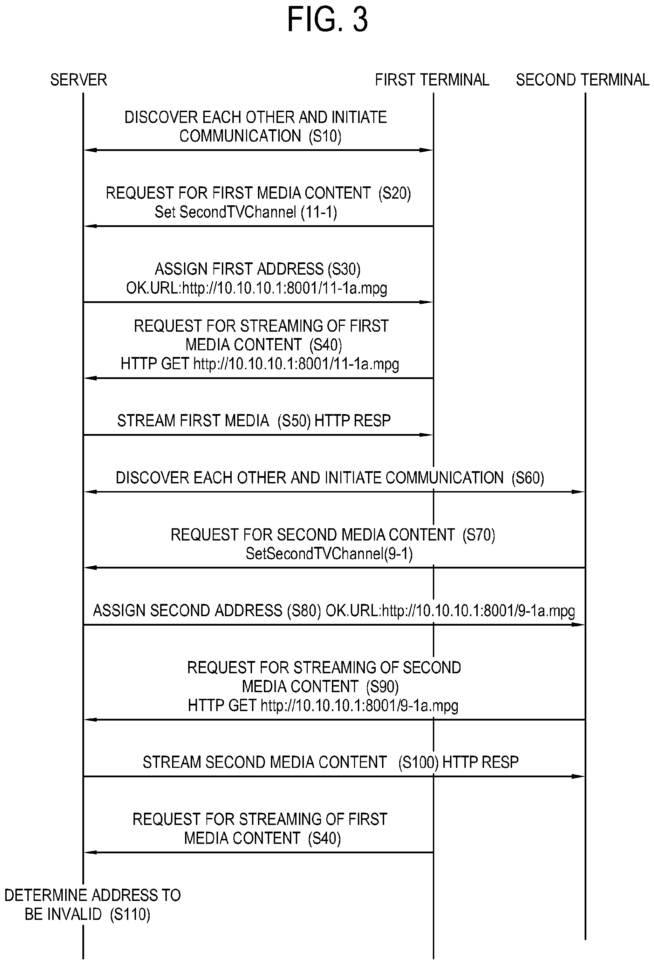

As described above, the display apparatus 100 according to the present exemplary embodiment stream-transports data to the terminals 210, 220, 230 and 240 based on a protocol such as HTTP, FTP, RTP and RTSP under the middleware such as UPnP or DLNA. Referring to FIG. 3, a streaming transporting method of the display apparatus 100 according to an exemplary embodiment will be described as follows.

Referring to FIG. 3, the display apparatus 100 and the terminal 210 discover and communicate with each other (S10). According to the present exemplary embodiment, the second terminal 220 communicates with the display apparatus 100 after the connection of the first terminal 210 and the display apparatus 100.

If the first terminal 210 as a first client requests the first media content from the display apparatus 100 as a server(S20), the display apparatus 100 assigns the first address to the first media content (S30), and streams the first address information to the first terminal 210. As shown therein, if the first terminal 210 requests, as the first media content, a media content corresponding to a channel 11-1 among broadcasting signals (SetSecondTVChannel (11-1)), the controller 140 generates a first address corresponding to the channel 11-1 (OK.URL: http//10.10.10:8001/11-1a.mpg) in response to the request. The address information refers to an address of an internal server for the first terminal 210 to browse the first media content (i.e., channel 11-1). The controller 140 generates address information for each of the media contents to identify the media contents.

The first terminal 210 requests the display apparatus 100 to stream-transport the first media content based on the received first address (HTTP GET http://10.10.10.1:8001/11-1a.mpg) (S40).

The display apparatus 100 streams the first media content to the first terminal 210 according to a predetermined format in response to the request of the first terminal 210 (HTTP RESP) (S50). For example, the first media content is changed into packets in a body and then streamed. The above expressions of the address information and expressions for the transmission of the first media content are merely exemplary, and another exemplary embodiment is not limited thereto.

The second terminal 220 is connected to the display apparatus 100 in a network while the first media content is being stream-transported to the first terminal 210. The second terminal 220 and the display apparatus 100 also discover and communicate with each other (S60).

If a media content which the second terminal 220 requests for is a channel 9-1 rather than the channel 11-1, i.e., if the second terminal 220 requests a second media content different from the first media content (SetSecondTVChannel (9-1)) (S70), the controller 140 assigns the second address, different from the first address, to the second media content (OK.URL: http://10.10.10.1:8001/9-1a.mpg) (S80). The controller 140 transmits the newly-assigned second address information to the second terminal 220. The second terminal 220 requests the display apparatus 100 to stream-transport the second media content corresponding to the second address information (HTTP GET http://10.10.10.1:8001/9-1a.mpg) (S90).

The controller 140 stream-transports the content of the channel 9-1 as the second media content to the second terminal 220 in response to the request of the second terminal 220 (HTTP RESP) (S100).

The display apparatus 100 according to the present exemplary embodiment includes a single content processor 130, and stream-transports the media content according to a most recent request if a plurality of clients requests the media content. In this case, the controller 140 generates a new address whenever the media content is requested and informs the terminals of the new address.

In contrast, if a related art controller assigns one address whenever a content is requested, regardless of a number of different media contents, a first terminal may misunderstand that it receives the previously-requested media content even though it actually receives the changed media content. For example, in the related art system, since the channel 11-1 and the channel 9-1 have the same address, a second terminal as well as the first terminal receives a broadcasting signal from the channel 9-1 if the second terminal changes the channel from 11-1 to 9-1. A user of the first terminal may mistakenly believe that the user is viewing the channel 11-1 that the user has requested even though the first terminal receives the media content of the channel 9-1. Furthermore, all of the address information which may be provided by the display apparatus may be provided to the terminals and the terminals may request a content according to particular address information. In this case, the possibility of errors due to the plurality of address information increases, and the possibility of cut media contents increases if a plurality of terminals is connected.

In contrast, if a request for a media content different from the currently streamed media content is received, the display apparatus 100 according to the present exemplary embodiment generates a new and valid address and assigns the new address to the media content to thereby prevent misunderstanding in the streaming of the media content and to manage the address of the media content efficiently. Since the address for the streaming of the media content is changed from the first address to the second address, the media content is no longer streamed to the first terminal 210.

If the first terminal 210 attempts to stream the media content again (S40), the display apparatus 100 determines that the first address requested by the first terminal 210 is invalid (S110), and suspends streaming to the channel 11-1.

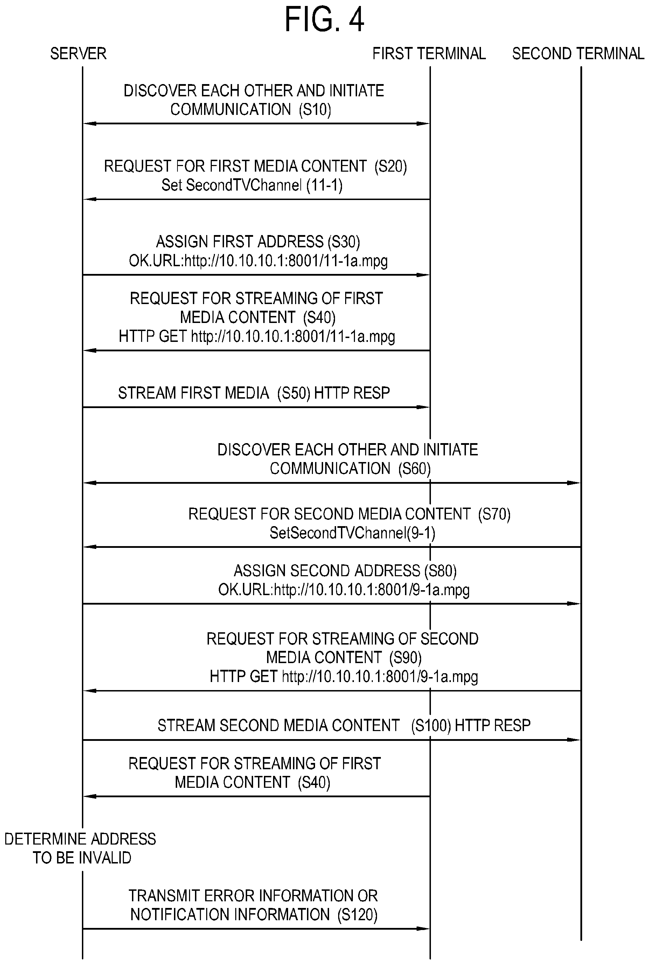

FIG. 4 is a control flowchart of a steaming transporting method of a display apparatus according to another exemplary embodiment. Referring to FIG. 4, the processes of streaming the second media content to the second terminal 220 upon a request from the second terminal 220 after the streaming of the first media content to the first terminal 210 and of suspending the streaming of the first media content are the similar to those in FIG. 3 (S10 to S110).

If it is determined that the first address is not valid for the first media content requested again by the first terminal 210, the controller 140 transmits error information informing an inability to stream the first media content or notification information notifying the change of the media content to the first terminal 210 (S120). The error information or notification information may be output as at least one of a video, a still image, and an audio. A user may recognize the media content changed by others through the information as above. Moreover, if a plurality terminals receive the first media content, the notification information may be transmitted to the plurality of terminals.

According to another exemplary embodiment, a terminal which may not receive the media content any more may generate the notification information or the error information instead of the display apparatus 100.

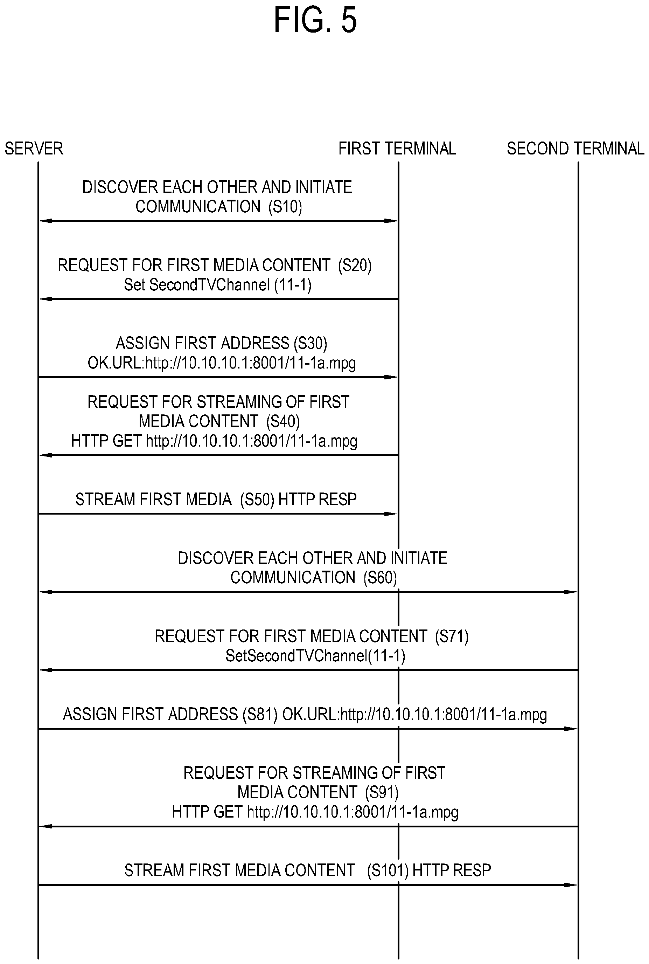

FIG. 5 is a control flowchart of a streaming transporting method of a display apparatus 100 when the same media content is requested for according to an exemplary embodiment. As shown therein, the process of communicating with the second terminal 220 following the streaming of the first media content to the first terminal 210 is similar to that in FIG. 3 (S10 to S60).

If the second terminal 220 requests the first media content which is the same as the media content requested by the first terminal 210 following the request of the first media content by the first terminal 210 (SetSecondTVChannel (11-1)) (S71), the controller 140 assigns the first address corresponding to the channel 11-1 in response to the request (OK.URL: http://10.10.10.1:8001/11-1a.mpg) (S81). That is, the display apparatus 100 according to the present exemplary embodiment assigns the address to the media content whenever the media content is requested for instead of generating the address corresponding to the media content and transmitting the address to the terminal when initiating the communication with the terminals 210 and 220.

The second terminal 220 requests the display apparatus 100 to stream-transport the first media content based on the received first address (HTTP GET http://10.10.10.1:8001/11-1a.mpg) (S91). The display apparatus 100 stream-transports the first media content to the second terminal 220 according to the predetermined format in response to the request of the second terminal 220 (S101).

If the media content which is currently displayed in the display apparatus 100 is newly requested, the signal which is transmitted from the terminal to the display apparatus 100 is not limited to that as shown in FIG. 5 (SetSecondTVChannel (11-1)), and may include various types in other exemplary embodiments, e.g., SetSecondTVclone.

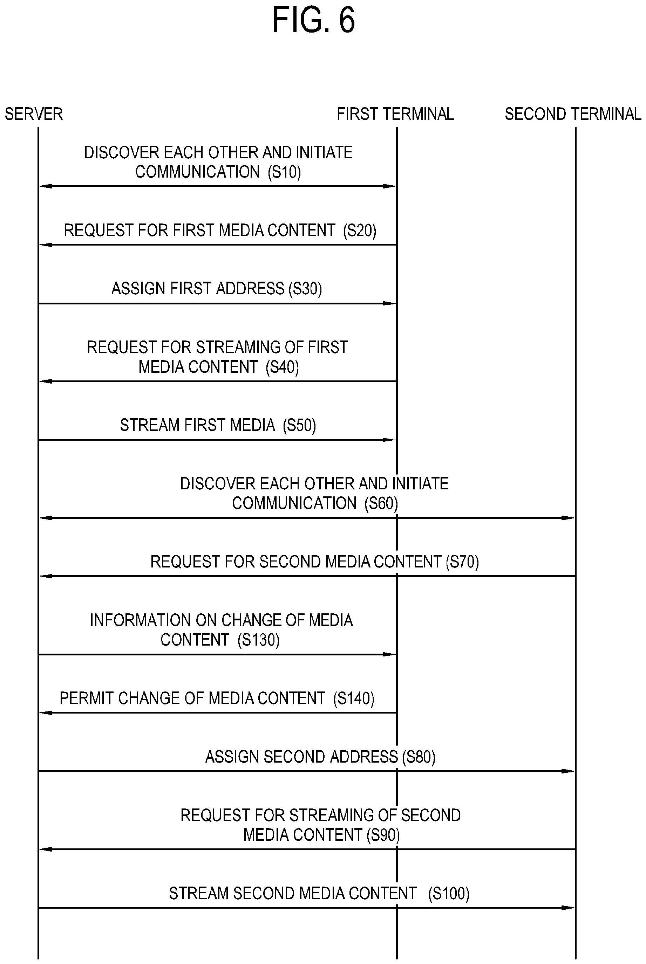

FIG. 6 is a control flowchart of a streaming transporting method of a display apparatus according to another exemplary embodiment. Referring to FIG. 6, the process of initiating communication with the second terminal 220 following the streaming of the fist media content to the first terminal 210 is similar to that in FIG. 3 (S10 to S60).

If the request of the second media content by the second terminal 220 is received, the controller 140 transmits the information on the change of the media content to the first terminal 210 (S130).

If the first terminal transmits the signal permitting the change of the media content (S140), the controller 140 transmits the second address to the second terminal 220 (S80).

The display apparatus 100 according to the present exemplary embodiment takes into account a user of the first terminal 210 which requests the first media content prior to the request of the second media content, and transmits the user interface information as above to balance the streaming of the media contents among the plurality of terminals 210 and 220.

If the first terminal 210 transmits the signal rejecting the change of the media content, the controller 140 may transmit a signal informing inability to stream-transport the media content to the second terminal 220 to maintain the streaming of the first media content.

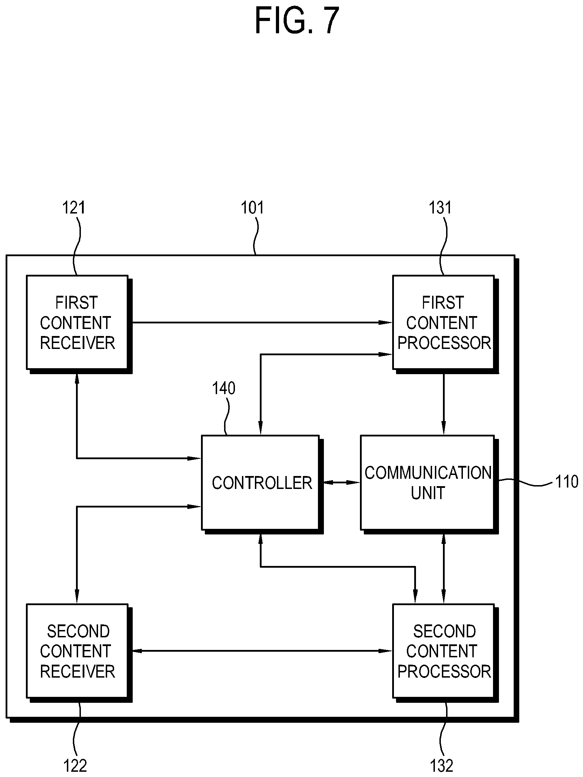

FIG. 7 is a control block diagram of a display apparatus 101 according to another exemplary embodiment. Referring to FIG. 7, the display apparatus 101 includes a plurality of content receivers 121 and 122 and a plurality of content processors 131 and 132. If a first terminal 210 requests a first media content, a controller 140 streams the first media content, and streams a second media content to a second terminal 220 upon a request for the second media content by the second terminal 220. Since there are two content processors 131 and 132 processing the media contents to be streamed in real-time, the controller 140 does not suspend the streaming of the first media content according to the request of the second terminal 220. The controller 140 may assign different addresses according to the request of the media contents from the terminals 210 and 220, and may simultaneously stream the first and second media contents according to the addresses.

If a third terminal 230 requests a third media content, which is different from the first and second media contents, the controller 140 may assign a third address to the third media content and suspend the streaming to either the first terminal 210 or the second terminal 220. In this case, the controller 140 may transmit a UI to the first terminal 210 or the second terminal 220 whether to receive the information on the change of the media content or to permit the change of the media content.

Exemplary embodiments assign a preset number of variable and valid addresses according to a capability of outputting media contents and stream contents efficiently without using a single or a plurality of fixed addresses.

As described above, a display apparatus and a streaming transporting method of the same according to an exemplary embodiment stream a media content efficiently. Also, a display apparatus and a streaming transporting method of the same according to another exemplary embodiment prevent a user's misunderstanding even if a media content is changed. Further, a display apparatus and a streaming transporting method of the same according to another exemplary embodiment provide a user interface (UI) to accept an existing user's selection if a media content is changed.

While not restricted thereto, exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, exemplary embodiments may be written as computer programs transmitted over a computer-readable transmission medium, such as a carrier wave, and received and implemented in general-use or special-purpose digital computers that execute the programs. Moreover, while not required in all aspects, one or more units of the display apparatus 100 or 101 can include a processor or microprocessor executing a computer program stored in a computer-readable medium.

Although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus, comprising:
a content processor arranged to process a first media content from among a plurality of media contents;
a communication unit for communicating with a plurality of terminals; and
a controller arranged to assign a first address to the first media content in response to a request for the first media content, and to control the communication unit to stream the first media content processed by the content processor to a first terminal, of the plurality of terminals, based on the assigned first address.

2. The display apparatus according to claim 1, wherein the controller is arranged to assign a second address, which is different from the first address, to a second media content, which is different from the first media content, in response to a request for the second media content by a second terminal.

3. The display apparatus according to claim 2, wherein the controller is arranged to control the communication unit to suspend the streaming of the first media content to the first terminal in response to the assigning of the second address to the second media content, and to control the communication unit to stream the second media content processed by the content processor to the second terminal based on the assigned second address.

4. The display apparatus according to claim 1, wherein the controller is arranged to transmit notification information on a change of requested media content to the first terminal receiving the first media content in response to a request for second media content, which is different from the first media content, by a second terminal, which is different from the first terminal.

5. The display apparatus according to any one of the preceding claims, further comprising a broadcasting receiver arranged to receive the first media content.

6. The display apparatus according to any one of the preceding claims, wherein the content processor is arranged to reduce a resolution of the first media content before the communication unit streams the first media content to the first terminal.

7. The display apparatus according to claim 2, further comprising an additional content processor, wherein the controller is arranged to control the additional content processor to process the second stream and to control the communication unit to stream the second media content to the second terminal, in response to a request for the streaming of the second media content based on the assigned second address, simultaneous with the streaming of the first media content to the first terminal.

8. The display apparatus according to claim 7, further comprising a first content receiver arranged to receive the first media content and a second content receiver which receives the second media content.

9. A streaming transporting method of a display apparatus which communicates with a plurality of terminals, the method comprising:
assigning a first address to a first media content in response to a request for the first media content;
processing the first media content to be streamed; and
streaming the first media content to a first terminal, from among the plurality of terminals, based on the first address.

10. The method according to claim 9, further comprising:
assigning a second address, which is different from the first address, to a second media content, which is different from the first media content, in response to a request for the second media content from a second terminal, of the plurality of terminals; and
streaming the second media content to the second terminal based on the second address.

11. The method according to claim 10, wherein the assigning the second address comprises suspending the streaming of the first media content to the first terminal.

12. The method according to claim 9, further comprising transmitting notification information on a change of requested media content to the first terminal receiving the first media content in response to a request for second media content, which is different from the first media content, by a second terminal, which is different from the first terminal.

13. The method according to any one of claims 9 to 12, wherein the processing the first media content comprises reducing a resolution of the first media content prior to the streaming the first media content to the first terminal.

## Patentansprüche

1. Anzeigevorrichtung, die Folgendes umfasst:
einen Inhaltsprozessor zum Verarbeiten eines ersten Medieninhalts aus einer Mehrzahl von Medieninhalten;
eine Kommunikationseinheit zum Kommunizieren mit einer Mehrzahl von Endgeräten; und
eine Steuerung zum Zuordnen einer ersten Adresse zum ersten Medieninhalt als Reaktion auf eine Anforderung des ersten Medieninhalts und zum Steuern der Kommunikationseinheit zum Streamen des vom Inhaltsprozessor verarbeiteten ersten Medieninhalts zu einem ersten Endgerät aus einer Mehrzahl von Endgeräten auf der Basis der zugeordneten ersten Adresse.

2. Anzeigevorrichtung nach Anspruch 1, wobei die Steuerung zum Zuordnen einer zweiten Adresse, die sich von der ersten Adresse unterscheidet, zu einem zweiten Medieninhalt, der sich vom ersten Medieninhalt unterscheidet, als Reaktion auf eine Anforderung des zweiten Medieninhalts von einem zweiten Endgerät ausgelegt ist.

3. Anzeigevorrichtung nach Anspruch 2, wobei die Steuerung zum Steuern der Kommunikationseinheit zum Unterbrechen des Streamens des ersten Medieninhalts zum ersten Endgerät als Reaktion auf die Zuordnung der zweiten Adresse zum zweiten Medieninhalt und zum Steuern der Kommunikationseinheit zum Streamen des vom Inhaltsprozessor verarbeiteten zweiten Medieninhalts zum zweiten Endgerät auf der Basis der zugeordneten zweiten Adresse ausgelegt ist.

4. Anzeigevorrichtung nach Anspruch 1, wobei die Steuerung zum Übertragen von Benachrichtigungsinformationen über eine Änderung von angefordertem Medieninhalt zu dem den ersten Medieninhalt empfangenden ersten Endgerät als Reaktion auf eine Anforderung von zweitem Medieninhalt, der sich vom ersten Medieninhalt unterscheidet, durch ein zweites Endgerät ausgelegt ist, das sich vom ersten Endgerät unterscheidet.

5. Anzeigevorrichtung nach einem der vorherigen Ansprüche, die ferner einen zum Empfangen des ersten Medieninhalts ausgelegten Broadcasting-Empfänger umfasst.

6. Anzeigevorrichtung nach einem der vorherigen Ansprüche, wobei der Inhaltsprozessor zum Reduzieren einer Auflösung des ersten Medieninhalts vor dem Streamen des ersten Medieninhalts zum ersten Endgerät durch die Kommunikationseinheit ausgelegt ist.

7. Anzeigevorrichtung nach Anspruch 2, die ferner einen zusätzlichen Inhaltsprozessor umfasst, wobei die Steuerung zum Steuern des zusätzlichen Inhaltsprozessors zum Verarbeiten des zweiten Stroms und zum Steuern der Kommunikationseinheit zum Streamen des zweiten Medieninhalts zu dem zweiten Endgerät als Reaktion auf eine Anforderung zum Streamen des zweiten Medieninhalts auf der Basis der zugeordneten zweiten Adresse gleichzeitig mit dem Streamen des ersten Medieninhalts zum ersten Endgerät ausgelegt ist.

8. Anzeigevorrichtung nach Anspruch 7, die ferner einen ersten Inhaltsempfänger zum Empfangen des ersten Medieninhalts und einen zweiten Inhaltsempfänger zum Empfangen des zweiten Medieninhalts umfasst.

9. Streaming-Transportverfahren einer Anzeigevorrichtung, die mit einer Mehrzahl von Endgeräten kommuniziert, wobei das Verfahren Folgendes beinhaltet:
Zuordnen einer ersten Adresse zu einem ersten Medieninhalt als Reaktion auf eine Anforderung des ersten Medieninhalts;
Verarbeiten des zu streamenden ersten Medieninhalts; und
Streamen des ersten Medieninhalts zu einem ersten Endgerät aus der Mehrzahl von Endgeräten auf der Basis der ersten Adresse.

10. Verfahren nach Anspruch 9, das ferner Folgendes beinhaltet:
Zuordnen einer zweiten Adresse, die sich von der ersten Adresse unterscheidet, zu einem zweiten Medieninhalt, der sich vom ersten Medieninhalt unterscheidet, als Reaktion auf eine Anforderung des zweiten Medieninhalts von einem zweiten Endgerät aus der Mehrzahl von Endgeräten; und
Streamen des zweiten Medieninhalts zum zweiten Endgerät auf der Basis der zweiten Adresse.

11. Verfahren nach Anspruch 10, wobei das Zuordnen der zweiten Adresse das Unterbrechen des Streaming des ersten Medieninhalts zum ersten Endgerät beinhaltet.

12. Verfahren nach Anspruch 9, das ferner das Übertragen von Benachrichtigungsinformationen über eine Änderung von angefordertem Medieninhalt zu dem den ersten Medieninhalt empfangenden ersten Endgerät als Reaktion auf eine Anforderung von zweitem Medieninhalt, der sich vom ersten Medieninhalt unterscheidet, durch ein zweites Endgerät beinhaltet, das sich vom ersten Endgerät unterscheidet.

13. Verfahren nach einem der Ansprüche 9 bis 12, wobei das Verarbeiten des ersten Medieninhalts das Reduzieren einer Auflösung des ersten Medieninhalts vor dem Streamen des ersten Medieninhalts zum ersten Endgerät beinhaltet.

## Revendications

1. Appareil d'affichage, comprenant :
un processeur de contenus agencé de façon à traiter un premier contenu média parmi une pluralité de contenus média ;
une unité de communication pour communiquer avec une pluralité de terminaux ; et
un contrôleur agencé de façon à attribuer une première adresse au premier contenu média en réponse à une requête pour le premier contenu média, et à contrôler l'unité de communication pour diffuser en continu le premier contenu média traité par le processeur de contenus à un premier terminal, de la pluralité de terminaux, sur la base de la première adresse ayant été attribuée.

2. Appareil d'affichage selon la revendication 1, le contrôleur étant agencé de façon à attribuer une deuxième adresse, qui est différente de la première adresse, à un deuxième contenu média, qui est différent du premier contenu média, en réponse à une requête pour le deuxième contenu média par un deuxième terminal.

3. Appareil d'affichage selon la revendication 2, le contrôleur étant agencé de façon à contrôler l'unité de communication pour mettre en suspens la diffusion en continu du premier contenu média au premier terminal en réponse à l'attribution de la deuxième adresse au deuxième contenu média, et à contrôler l'unité de communication pour diffuser en continu le deuxième contenu média traité par le processeur de contenus au deuxième terminal, sur la base de la deuxième adresse ayant été attribuée.

4. Appareil d'affichage selon la revendication 1, le contrôleur étant agencé de façon à transmettre des informations de notification concernant un changement du contenu média requis au premier terminal lequel reçoit le premier contenu média en réponse à une requête pour un deuxième contenu média, qui est différent du premier contenu média, par un deuxième terminal, qui est différent du premier terminal.

5. Appareil d'affichage selon l'une quelconque des revendications précédentes, comprenant en outre un récepteur de radiodiffusion agencé de façon à recevoir le premier contenu média.

6. Appareil d'affichage selon l'une quelconque des revendications précédentes, le processeur de contenus étant agencé de façon à réduire une résolution du premier contenu média avant que l'unité de communication ne diffuse en continu le premier contenu média au premier terminal.

7. Appareil d'affichage selon la revendication 2, comprenant en outre un processeur additionnel de contenus, cas dans lequel le contrôleur est agencé de façon à contrôler le processeur additionnel de contenus pour traiter le deuxième flux et à contrôler l'unité de communication pour diffuser en continu le deuxième contenu média au deuxième terminal, en réponse à une requête pour la diffusion en continu du deuxième contenu média sur la base de la deuxième adresse ayant été attribuée, en simultanéité avec la diffusion en continu du premier contenu média au premier terminal.

8. Appareil d'affichage selon la revendication 7, comprenant en outre un premier récepteur de contenus agencé de façon à recevoir le premier contenu média, et un deuxième récepteur de contenus qui reçoit le deuxième contenu média.

9. Procédé de transport de diffusion en continu d'un appareil d'affichage qui communique avec une pluralité de terminaux, le procédé comprenant les opérations consistant à :
attribuer une première adresse à un premier contenu média en réponse à une requête pour le premier contenu média ;
traiter le premier contenu média devant être diffusé en continu ; et
diffuser en continu le premier contenu média à un premier terminal, parmi la pluralité de terminaux, sur la base de la première adresse.

10. Procédé selon la revendication 9, comprenant en outre les opérations consistant à :
attribuer une deuxième adresse, qui est différente de la première adresse, à un deuxième contenu média, qui est différent du premier contenu média, en réponse à une requête pour le deuxième contenu média en provenance d'un deuxième terminal, de la pluralité de terminaux ; et
diffuser en continu le deuxième contenu média au deuxième terminal sur la base de la deuxième adresse.

11. Procédé selon la revendication 10, l'attribution de la deuxième adresse comprenant la mise en suspens de la diffusion en continu du premier contenu média au premier terminal.

12. Procédé selon la revendication 9, comprenant en outre l'opération consistant à transmettre des informations de notification concernant un changement du contenu média requis au premier terminal lequel reçoit le premier contenu média en réponse à une requête pour un deuxième contenu média, qui est différent du premier contenu média, par un deuxième terminal, qui est différent du premier terminal.

13. Procédé selon l'une quelconque des revendications 9 à 12, le traitement du premier contenu média comprenant la réduction d'une résolution du premier contenu média avant de diffuser en continu le premier contenu média au premier terminal.
